**Europäisches Patentamt**

**European Patent Office**

**Office européen des brevets**

(19)

(11) Veröffentlichungsnummer: **0 257 461 B1**

(12) # EUROPÄISCHE PATENTSCHRIFT

(45) Veröffentlichungstag der Patentschrift: **26.02.92**

(51) Int. Cl.5: **B31C 3/00**, B29C 53/66, B29C 53/80, //B65H75/10

(21) Anmeldenummer: **87111717.2**

(22) Anmeldetag: **13.08.87**

(54) **Verfahren und Vorrichtung zur Herstellung spiralgewickelter Rohre, Hülsen, Behälter oder dgl.**

(30) Priorität: **16.08.86 DE 3627839**

(43) Veröffentlichungstag der Anmeldung:
**02.03.88 Patentblatt 88/09**

(45) Bekanntmachung des Hinweises auf die Patenterteilung:
**26.02.92 Patentblatt 92/09**

(84) Benannte Vertragsstaaten:
**BE CH DE FR GB IT LI LU NL**

(56) Entgegenhaltungen:
**DE-A- 2 303 661**
**US-A- 1 312 780**
**US-A- 3 350 030**
**US-A- 4 010 054**

(73) Patentinhaber: **Norddeutsche Faserwerke GmbH**
**Tungendorfer Strasse 10**
**W-2350 Neumünster(DE)**

(72) Erfinder: **Petersen, Hans-Joachim**
**Meisenweg 21**
**W-2350 Neumünster(DE)**

(74) Vertreter: **UEXKÜLL & STOLBERG Patentanwälte**
**Beselerstrasse 4**
**W-2000 Hamburg 52(DE)**

EP 0 257 461 B1

# Beschreibung

Nach US-PS 1 312 780 werden Rohre, die durch spiraliges (schraubenförmiges) Wickeln von Papp- oder Papierstreifen auf einen Dorn hergestellt werden, durch eine oder zwei Lagen von ebenfalls spiralig aufgewickelten Metalldrähten oder -streifen verstärkt. Das spiralig gewickelte Rohr entsteht als endloses Rohr und wird in die Längen geschnitten, in denen es als Behälter, Leitung oder dergl. benötigt wird.

US-PS 3 350 030 beschreibt Spulhülsen zum Aufwickeln von Garnen, Fäden oder dergl., die über einem Kern aus einer harzgetränkten Papiermasse mehrere Lagen von Glasfasersträngen aufweisen. Hierbei soll der größere Teil der Glasfaserstränge einen geringen Steigungswinkel aufweisen, um Radialkräfte aufzunehmen, während ein kleinerer Teil der Stränge hohe Steigungswinkel aufweisen soll, um längs der Hülsenachse auftretende Beanspruchung zu kompensieren.

Die Herstellung derartiger Rohre bzw. Spulhülsen im kontinuierlichen Wickelvorgang ist nicht möglich. Wegen der stetigen Dreh- und Vorwärtsbewegung des Rohrkernes kann eine Fadenschar jeweils nur für eine begrenzte Zeit und damit nur für eine begrenzte Länge unter einem vorgegebenen Steigungswinkel auf den Rohrkern aufgebracht werden, wenn dieser Winkel von dem durch Drehund Vorschubgeschwindigkeit bestimmten Winkel abweicht. US-PS 3 350 030 schlägt daher vor, den Rohrkern nicht im kontinuierlichen, sondern im absatzweisen Verfahren mit den Glasfasersträngen und der darüber anzubringenden Papierlage zu versehen und anschließend das Rohr auf die gewünschte Spulhülsenlänge abzuschneiden. Diese Arbeitsweise ist aufwendig und führt zu Abfall an den Enden der Rohrstücke, auf die die Glasfaser-Wicklungen aufgebracht werden.

Aus der DE-A-2 303 661 ist ein Verfahren zum Zuführen von Verstärkungsfäden beim Herstellen eines Rohres bekannt, bei dem die Verstärkungsfäden gewellt derart auf den Dorn aufgebracht werden, daß sie auf beiden Seiten eines Wendepunktes mit der Längsachse des Dornes entgegengesetzt gerichtete Winkel einschließen.

Die vorliegende Erfindung hat es sich zur Aufgabe gestellt, Nachteile der bekannten Herstellungsverfahren für spiralgewickelte Rohre, aus denen durch Zerschneiden z. B. Behälter oder Hülsen hergestellt werden und die eine Verstärkungseinlage aus fadenförmigen Gebilden aufweisen, zu vermeiden, insbesondere eine kontinuierliche Herstellung derartiger Rohre zu ermöglichen.

Zur Lösung dieser Aufgabe dient ein Verfahren zur Herstellung spiralgewickelter Rohre, Hülsen, Behälter oder dergleichen durch Wickeln von Papp- und/oder Papierstreifen auf einen Dorn mit zwischenliegender Verstärkung mittels parallel liegender fadenförmiger Gebilde, und gegebenenfalls Schneiden des erhaltenen Rohres in für Spinnhülsen, Behälter oder dergleichen geeignete Längen, welches dadurch gekennzeichnet ist, daß auf den Rohrkern aus Pappe und/oder Papier kontinuierlich mindestens zwei Fadenscharen gewickelt werden, von denen, zeitlich abwechselnd, jeweils mindestens die Fadenlage einer Fadenschar auf dem Rohrkern einen Winkel von annäherd 90 Grad in Bezug auf die Rohrachse einnimmt.

Erfindungsgemäß geschieht dies also dadurch, daß kontinuierlich auf den Papp- oder Papierkern mindestens zwei Scharen aus fadenförmigen Gebilden - im folgenden kurz Fadenschar - aufgewickelt werden, die zeitlich - und wegen der Vorwärtsbewegung des Kerns auch räumlich auf diesem - wechselnde Steigungswinkel besitzen, wobei jeweils mindestens die Fadenlage einer Fadenschar auf dem Rohrkern einen sehr kleinen Steigungswinkel aufweist, die Fäden also etwa senkrecht zur Rohrachse liegen. Insbesondere wird dies dadurch ermöglicht, daß die Führungsorgane jeder Fadenschar parallel zur Rohrachse verschiebbar sind, und das Führungsorgan für die Fadenschar, die senkrecht zur Rohrachse aufgewickelt werden soll, parallel zu dieser etwa mit der gleichen Geschwindigkeit wie der Vorschub des Rohres bewegt wird.

Neben den in den US-PSen 1 312 780 und 3 350 030 genannten Metalldrähten und -streifen bzw. Glasfasersträngen können als fadenförmige Gebilde alle Arten von Garnen, sekundär gesponnen aus natürlichen und mineralischen sowie aus Chemiefasern, Filamentgarne, Drähte und Bändchen aus zellulosischen und synthetischen Produkten aber auch Metallfilamentgarne sowie Filamentgarne aus Glas und Stein Verwendung finden. Bevorzugt werden fadenförmige Gebilde aus Thermoplasten wie Polyamiden, Polyolefinen und insbesondere Polyester, vor allem in Form von monofilen oder multifilen Filamentfäden oder von Bändchen.

Es ist nicht erforderlich, daß die Fäden dicht bei dicht liegen; vielmehr reicht z. B. bei multifilen Polyesterfäden ein Fadenabstand von ca. 1 mm aus, dem Rohr bzw. dem daraus hergestellten Behälter bzw. der Spinnhülse eine ausreichende Festigkeit zu verleihen. Die Anzahl der Fäden einer Fadenschar richtet sich nach dem Abstand der Fäden untereinander sowie nach der Breite der Fadenschar, die der zu verarbeitenden Papierbahnbreite entsprechen sollte. Die Fäden sollten so weit voneinander entfernt liegen, daß ein Verkleben der unter der Fadenschar liegenden Papierbahn mit der darauf liegenden Papierbahn gewährleistet ist. Auch ist es möglich, jeweils nur eine Fadenlage zwischen zwei Papierlagen anzuordnen.

Über die Fadenlage wird üblicherweise anschließend eine weitere Papierschicht angebracht, insbesondere wiederum durch spiraliges Wickeln eines Papierstreifens. Dies geschieht zweckmäßig im gleichen Arbeitsgang wie das Wickeln des Rohrkernes und die Bildung der Fadenlagen, so daß ein endloses, fadenverstärktes Rohr in einem Arbeitsgang entsteht. Dieses Rohr kann in die z. B. für Spinnhülsen, Behälter oder dergl. notwendigen Längen geschnitten werden.

Die Vorrichtung zur Durchführung des erfindungsgemäßen Verfahrens besitzt - neben den für die Herstellung spiralgewickelter Rohre bekannten Einrichtungen - mindestens zwei parallel zum Wikkeldorn angeordnete und in dessen Achsrichtung verschiebbare Fadenführer für jeweils eine Fadenschar. Die Bewegung dieser Fadenführer parallel zum Wickeldorn wird durch Steuereinrichtungen besorgt; als Steuereinrichtungen können z. B. Kurvenscheiben verwendet werden, die insbesondere synchron mit der Drehung des Hülsenkernes und damit der Vorwärtsbewegung des Kernes angetrieben werden.

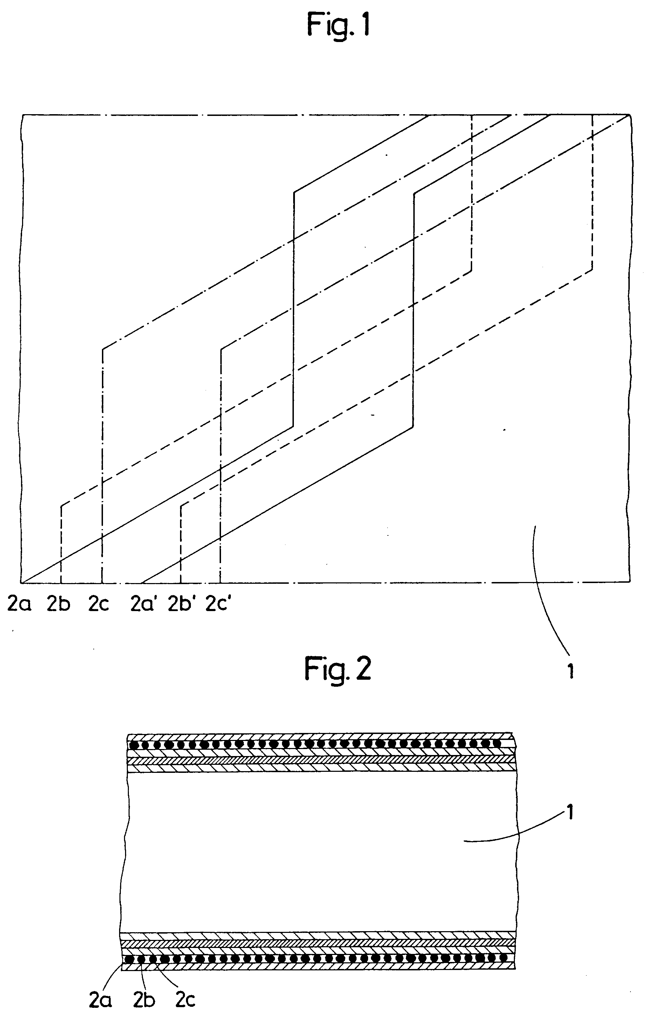

In der anliegenden Zeichnung ist die Erfindung weiter erläutert. Fig. 1 zeigt den aufgeschnittenen und plangelegten Rohrkern 1 mit darauf gewickelten drei Fadenscharen 2a, 2b und 2c, wobei wegen der Übersichtlichkeit von jeder Fadenschar nur zwei Fäden während einer Umdrehung des Rohrkernes gezeichnet sind. Die Dauer des Arbeitszyklus jedes Fadenführers entspricht einer Umdrehung des Rohrkernes. Jeder Fadenführer und damit jede Fadenschar bewegt sich jeweils während der Hälfte eines Arbeitszyklus parallel zum Rohrkern mit dessen Vorschubgeschwindigkeit. Jeweils während der zweiten Hälfte des Arbeitszyklus läuft das Fadenführungsorgan zurück in die Ausgangsstellung, wodurch die betreffende Fadenlage schräg zur Achsrichtung des Rohres zu liegen kommt.

In der Fig. 2 ist in gleicher Weise eine parallel zur Achsrichtung des Rohres aufgeschnittene Rohrlage 1 dargestellt, auf der drei Fadenscharen 2a, 2b und 2c aufgewickelt worden sind.

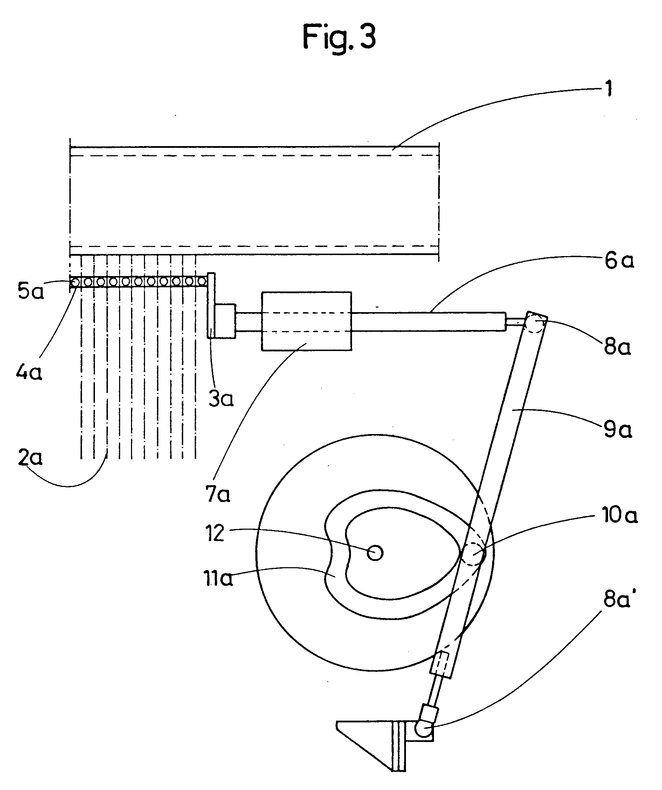

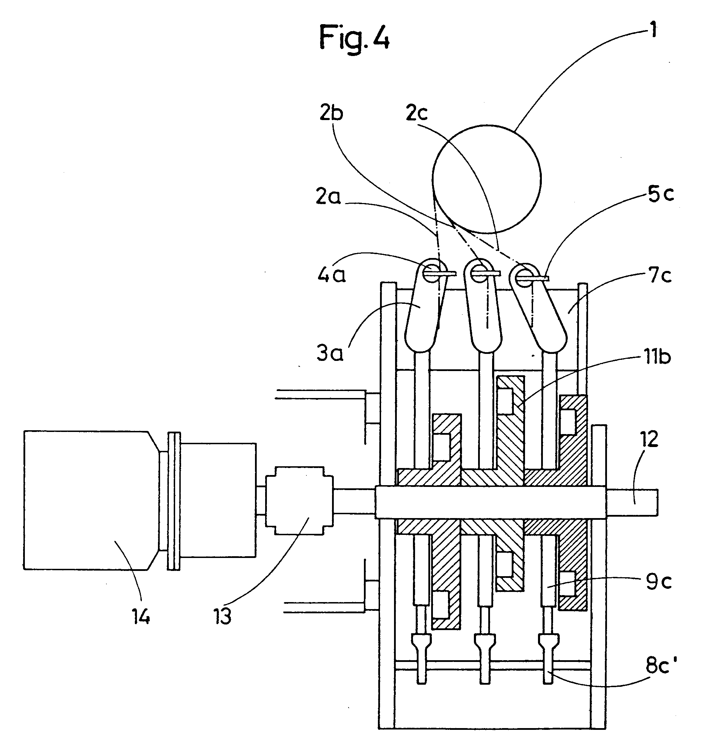

In den Fig. 3 und 4 sind die für die erfindungsgemäße Vorrichtung wesentlichen Einrichtungen dargestellt, wobei die für die einzelnen Fadenscharen 2a, 2b und 2c vorgesehenen Vorrichtungen jeweils mit dem gleichen Buchstaben bezeichnet sind wie die betreffende Fadenschar. Die Halter 4 für die Fadenführer 5 sind mittels Träger 3 an der Führungsstange 6 befestigt. Diese ist im Lager 7 verschiebbar durch die Hin- und Herbewegung der Changierstange 9, die durch das Gelenk 8 mit der Führungsstange 6 und durch das Gelenk 8' mit dem Gehäuse verbunden ist. Die Bewegung der Changierstange 9 wird durch eine Kurvenscheibe 11 und Kulissenstein 10 erzeugt, wobei die Form der Kurvenscheibe 11 die Ablegewinkel der Fadenschar 2 auf dem Rohrkern 1 bestimmt. Der Antrieb der Kurvenscheibe 11 erfolgt über den Stellmotor 14, der mit dem Antrieb der nicht gezeigten Wikkelmaschine synchron läuft, über das Getriebe 13 mittels Achse 12.

**Patentansprüche**

1. Verfahren zur Herstellung spiralgewickelter Rohre, Hülsen, Behälter oder dergleichen durch Wickeln von Papp- und/oder Papierstreifen auf einen Dorn mit zwischenliegender Verstärkung mittels parallel liegender fadenförmiger Gebilde, und gegebenenfalls Schneiden des erhaltenen Rohres in für Spinnhülsen, Behälter oder dergleichen geeignete Längen, **dadurch gekennzeichnet,** daß auf den Rohrkern (1) aus Pappe und/oder Papier kontinuierlich mindestens zwei Fadenscharen (2a, 2b, 2c) gewickelt werden, von denen, zeitlich abwechselnd, jeweils mindestens die Fadenlage einer Fadenschar (2a, 2b, 2c) auf dem Rohrkern (1) einen Winkel von annäherd 90 Grad in Bezug auf die Rohrachse einnimmt.

2. Verfahren nach Anspruch 1, **dadurch gekennzeichnet,** daß die Führungsorgane (4a, 5a) der etwa senkrecht zur Rohrachse auf den Rohrkern (1) zu wickelnden Fadenschar (2a, 2b, 2c) sich jeweils mit etwa der Vorschubgeschwindigkeit des Rohrkernes (1) parallel zu dessen Achse bewegen.

3. Verfahren nach Anspruch 1 oder 2, **dadurch gekennzeichnet,** daß die fadenförmigen Gebilde aus Polyester-Filamentgarn bestehen.

**Claims**

1. Process for producing spirally wound tubes, sleeves₁ containers, etc. by winding cardboard and/or paper strips onto a mandrel with an intermediate reinforcement by means of parallel filamentary structures and optionally cutting the tube obtained into lengths suitable for spinning sleeves, containers, etc., which is characterized in that at least two thread groups (2a, 2b 2c) are continuously wound onto the cardbard and/or paper tube core (1) and whereof, in time alternating manner, in each case at least the threaded layer of one thread group (2a, 2b, 2c) assumes on the tube core (1) an angle of approximately 90° relative to the tube axis.

2. Process according to claim 1, characterized in that the guide members (4a, 5a) of the thread group (2a, 2b, 2c) to be wound onto the tube core (1) roughly at right angles to the tube axis move roughly at the speed of advance of the tube core (1) parallel to its axis.

3. Process according to claims 1 or 2, characterized in that the filamentary structures comprise polyester filamentary yarn.

## Revendications

1. Procédé de fabrication de tubes, manchons, récipients ou équivalents à enroulement hélicoïdal, par enroulement de bandes de carton et/ou de papier sur un mandrin, avec renforcement en interposition au moyen de corps en forme de fils qui s'étendent parallèlement, et éventuellement avec découpage du tube ainsi obtenu en longueurs appropriées pour des manchons de filature, récipients et équivalents, caractérisé en ce que, sur le noyau (1) du tube, fait de carton et/ou de papier, on enroule en continu au moins deux nappes de fils (2a, 2b, 2c) parmi lesquelles, en alternance dans le temps, au moins la position des fils d'une nappe de fils (2a, 2b, 2c) disposée sur le noyau (1) du tube, forme un angle d'environ 90° avec l'axe du tube.

2. Procédé selon la revendication 1, caractérisé en ce que les organes de guidage (4a, 5a) de la nappe de fils (2a, 2b, 2c) qu'il s'agit d'enrouler sur le noyau (1) du tube à peu près perpendiculairement à l'axe du tube, se déplacent au moment considéré avec une vitesse à peu près égale à la vitesse d'avance du noyau (1) du tube, parallèlement à l'axe de ce dernier.

3. Procédé selon la revendication 1 ou 2, caractérisé en ce que les corps en forme de fil sont composés d'un fil de filaments continus de polyester.

# Fig. 1

2a   2b   2c   2a'  2b'  2c'

1

# Fig. 2

1

2a   2b   2c

# Fig. 3

# Fig.4